# EUROPEAN PATENT APPLICATION

(11) **EP 4 791 010 A1**
(43) Date of publication of application: **12.08.2026**
(21) Application number: 24886140.3
(22) Date of filing: 24.10.2024
(51) Int. Cl.: H04N 21/4402, H04N 21/436, H04N 21/4363, H04N 21/858

(54) **ELECTRONIC DEVICE AND METHOD FOR CONTENT TRANSMISSION USING ARTIFICIAL INTELLIGENCE MODEL IN ELECTRONIC DEVICE**

(30) Priority: 31.10.2023 KR 20230148119; 06.12.2023 KR 20230175414
(71) Applicant: Samsung Electronics Co., Ltd., Suwon-si, Gyeonggi-do 16677 (KR)
(72) Inventor: KIM, Bosung, Suwon-si, Gyeonggi-do 16677 (KR); KIM, Jihyun, Suwon-si, Gyeonggi-do 16677 (KR); MOON, Chankyoo, Suwon-si, Gyeonggi-do 16677 (KR); PARK, Sungkweon, Suwon-si, Gyeonggi-do 16677 (KR); LEE, Hyunseok, Suwon-si, Gyeonggi-do 16677 (KR)
(74) Representative: Gulde & Partner
(86) International application number: PCT/KR2024/016298
(87) International publication number: WO 2025/095465

(57) **Abstract**

An electronic device according to one embodiment comprises: a communication circuit; a memory; and a processor operatively connected to the communication circuit and the memory, wherein the memory may be configured to transmit instructions that, when executed by the processor, instruct the electronic device to: identify an external electronic device to which first content is to be transmitted; acquire a prompt for generating second content associated with the first content and supported by the external electronic device on the basis of content analysis information of the first content and device characteristic information of the external electronic device; acquire the second content corresponding to the prompt by using an artificial intelligence (AI) model; and transmit the first content and the second content to the external electronic device through the communication circuit or transmit the second content to the external electronic device through the communication circuit.

## Description

### [Technical Field]

Various embodiments of the disclosure relate to an electronic device and a method of transmitting content in the electronic device.

### [Background Art]

With the remarkable advancement of information and communication technology and semiconductor technology, the distribution and use of various electronic devices are rapidly increasing. Electronic devices are being developed so that a user may carry them around and communicate. An electronic device may refer to a device performing a specific function according to a loaded program, such as a mobile communication terminal, a tablet PC, a video/audio device, a desktop/laptop computer, or a vehicle navigation system.

An electronic device may include a function of sharing content with an external electronic device. Content may be various types of information or material, produced by digitally creating text, codes, voice, sound, images, video, or the like, for use in a wired or wireless telecommunication network, and processed and distributed, and may have various formats. An electronic device may transmit content to another electronic device and share the content according to a content sharing request by a user.

### [Detailed Description of the Invention]

### [Technical Problem]

An electronic device may identify whether an external electronic device supports a content format and share content with an external electronic device capable of supporting the content format. When an electronic device transmits content to an external electronic device that does not support the content format, the external electronic device may not be able to utilize the content because it does not support the content format even when it receives the content.

According to an embodiment, when content (e.g., first content) is to be transmitted (or shared) to an external electronic device, additional content (e.g., second content) supported by the external electronic device and associated with the content is generated and the content and the additional content are transmitted or the additional content is transmitted to the external electronic device, thereby allowing the external electronic device to utilize the additional content even when the content to be shared is not available on the external electronic device, and thus an electronic device and a method of transmitting content using an artificial intelligence model in the electronic device may be provided.

### [Technical Solution]

An electronic device according to an embodiment of the disclosure may include communication circuitry, memory, and a processor operatively connected to the communication circuitry and the memory. The memory according to an embodiment may store instructions configured to, when executed by the processor, cause the electronic device to identify an external electronic device to which to transmit first content. The instructions may be configured to, when executed by the processor, cause the electronic device to obtain a prompt for generating second content associated with the first content and supported by the external electronic device based on content analysis information of the first content and device characteristic information of the external electronic device. The instructions may be configured to, when executed by the processor, cause the electronic device to obtain the second content corresponding to the prompt using an AI model. The instructions may be configured to, when executed by the processor, cause the electronic device to transmit the first content and the second content to the external electronic device through the communication circuitry or transmit the second content to the external electronic device through the communication circuitry.

A method of transmitting content using an artificial intelligence model in an electronic device according to an embodiment of the disclosure may include an operation of identifying an external electronic device to which to transmit first content. The method according to an embodiment may include an operation of obtaining a prompt for generating second content associated with the first content and supported by the external electronic device based on content analysis information of the first content and device characteristic information of the external electronic device. The method according to an embodiment may include an operation of obtaining the second content corresponding to the prompt using the AI model. The method according to an embodiment may include an operation of transmitting the first content and the second content to the external electronic device through communication circuitry 190, 290 of the electronic device or transmitting the second content to the external electronic device through the communication circuitry.

According to an embodiment of the disclosure, in a non-volatile storage medium storing instructions, the instructions are configured to, when executed by an electronic device, cause the electronic device to perform at least one operation, and the at least one operation may include an operation of identifying an external electronic device to which to transmit first content. The at least one operation according to an embodiment may include an operation of obtaining a prompt for generating second content associated with the first content and supported by the external electronic device based on content analysis information of the first content and device characteristic information of the external electronic device. The at least one operation according to an embodiment may include an operation of obtaining the second content corresponding to the prompt using an AI model. The at least one operation according to an embodiment may include an operation of transmitting the first content and the second content to the external electronic device through communication circuitry 190, 290 of the electronic device or transmitting the second content to the external electronic device through the communication circuitry.

### [Brief Description of Drawings]

FIG. 1 is a block diagram illustrating an electronic device in a network environment according to an embodiment.
FIG. 2 is a schematic block diagram illustrating an electronic device according to an embodiment.
FIG. 3 is a view illustrating a configuration of a processor according to an embodiment.
FIG. 4 is a view schematically illustrating a prompt generation operation using a first AI model according to an embodiment.
FIG. 5 is a view schematically illustrating a second content generation operation using a second AI model according to an embodiment.
FIG. 6 is a flowchart illustrating a method of transmitting content using an AI model in an electronic device according to an embodiment.
FIG. 7 is a flowchart illustrating an operation of determining an external electronic device to which to transmit first content from among at least one recommended external electronic device and generating and transmitting second content in an electronic device according to an embodiment.
FIG. 8 is a flowchart illustrating an operation of generating second content for each of at least one recommended external electronic device and transmitting the second content to the external electronic device determined to receive the first content in an electronic device according to an embodiment.
FIG. 9 is a view illustrating an example of additional content generated for each of at least one external electronic device when an image sharing request is made in an electronic device according to an embodiment.

### [Mode for Carrying out the Invention]

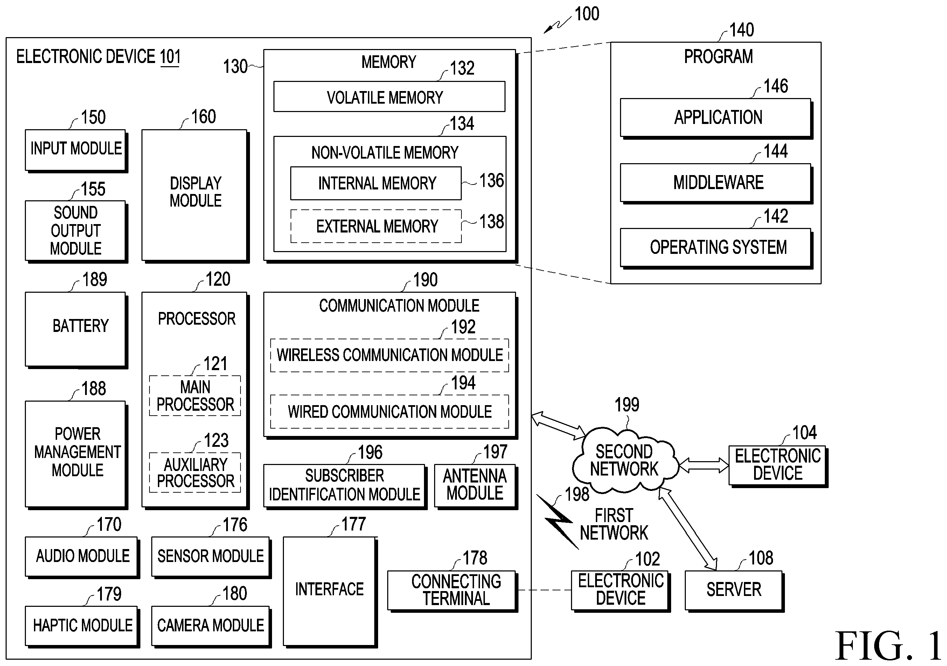

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other components (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing recordings. The receiver may be used to receive incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. The sensor module 176 may include, e.g., a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multiple components (e.g., multiple chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

In the following description, the components easy to understand from the description of the above embodiments are denoted with or without the same reference numerals and their detailed description may be skipped. According to an embodiment of the disclosure, an electronic device may be implemented by selectively combining configurations of different embodiments, and the configuration of one embodiment may be replaced by the configuration of another embodiment. However, it is noted that the present invention is not limited to a specific drawing or embodiment.

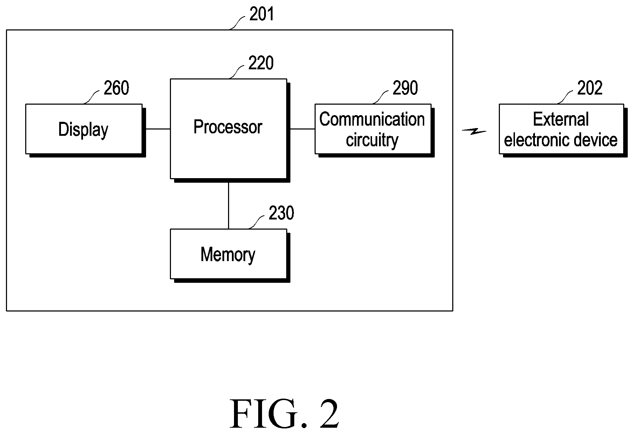

FIG. 2 is a block diagram schematically illustrating an electronic device according to an embodiment.

Referring to FIG. 2, an electronic device 201 (e.g., the electronic device 101 of FIG. 1) according to an embodiment may include a processor 220, memory 230, a display 260, and/or communication circuitry 290. The electronic device 201 according to an embodiment is not limited thereto and may be configured by further including various components or by excluding some of the components. The electronic device 201 according to an embodiment may further include the whole or part of the electronic device 101 illustrated in FIG. 1.

The processor 220 (e.g., the processor 120 of FIG. 1) according to an embodiment may include a central processing unit (CPU) or an application processor (AP) and may include a hardware structure specialized for processing an artificial intelligence (AI) model. The processor 220 according to an embodiment may perform overall control operations of the electronic device 201, and may control the electronic device 201 to perform an operation of transmitting content using an AI model to the external electronic device 202. The AI model according to an embodiment may include a generative AI model. For example, the generative AI model may be an artificial intelligence model capable of generating new content utilizing content such as text, an image, a video, and/or audio, or capable of learning patterns of content and generating new content as an inference result. The processor 220 according to an embodiment may use an AI model stored in the memory 230 or may use an AI model of an external server through communication with the external server (e.g., the server 108 of FIG. 1). The electronic device 201 according to an embodiment may use one or more AI models when transmitting content to the external electronic device 202.

The processor 220 according to an embodiment may identify a content (e.g., first content, hereinafter also referred to as 'first content') transmission request event. The first content according to an embodiment may include text, an image (or image data), a video (or video data), and/or audio (or audio data). For example, the processor 220 may identify a transmission request event for a photo (or image) selected by a user from among photos (or images) of a gallery (or photo album) application.

The processor 220 according to an embodiment may analyze the first content to obtain content analysis information based on the first content transmission request event, and may obtain device characteristic information of each of external electronic devices connected to the electronic device 201. The external electronic device according to an embodiment may include a mobile device (e.g., a smartphone), a refrigerator, an oven, an induction cooktop, an air conditioner, a washing machine, a television (TV), a virtual reality (VR) device, an internet of things (IOT) device, or another electronic device capable of operating in connection to the electronic device 201.

The processor 220 according to an embodiment may analyze the first content to obtain the type of the first content (e.g., text, an image, a video, or audio) and the content analysis information according to the type of the first content. The processor 220 according to an embodiment may obtain text analysis information (e.g., context information) when the first content is text, may obtain image analysis information when the first content is an image, may obtain video analysis information when the first content is a video, and may obtain audio analysis information when the first content is an audio. The processor 220 according to an embodiment may obtain device characteristic information including a device type, a device ID, a specification of the device, a function supported by the device, or device characteristics of other external electronic devices for each of the external electronic devices connected to the electronic device 201.

The processor 220 according to an embodiment may identify (or determine or confirm) the external electronic device 202 to which to transmit the first content. The processor 220 according to an embodiment may determine (or identify or confirm) at least one external electronic device (or at least one recommended external electronic device) recommended to receive the first content from among the external electronic devices using the content analysis information of the first content, the device characteristic information of each of the external electronic devices connected to the electronic device 201, locations of the electronic device 201 and each of the external electronic devices (or information related to a distance, a place, or other location between the electronic device 201 and the external electronic device), and/or context information (time, an operation state of each of the electronic device 201 and the external electronic device, or other designated context information), and may identify (or determine or identify) the external electronic device 202 to which to transmit the first content from among the at least one external electronic device based on a user input. The processor 220 according to an embodiment may display the at least one external electronic device on the display 260, and determine (or select) the external electronic device 202 to which to transmit the first content according to a user input. The processor 220 according to an embodiment may obtain (or generate) the second content corresponding to the prompt for the external electronic device 202 using the second AI model based on the determination of the external electronic device 202 to which to transmit the first content. The processor 220 according to an embodiment may obtain a prompt for generating second content associated with the first content and supported by the external electronic device based on the content analysis information of the first content and device characteristic information of the external electronic device to which to transmit the first content. The processor 220 according to an embodiment may use an AI model (e.g., a first AI model or a prompt generation AI model, hereinafter also referred to as 'first AI model') or a designated rule (or condition) for determining the external electronic device to which to transmit the first content and generating the prompt. The prompt according to an embodiment may include natural language or a function (or a command) that may be input to an AI model (e.g., a second AI model or a content generation AI model, hereinafter referred to as 'second AI model') to generate second content associated with the first content and supported by the external electronic device. According to an embodiment, the first AI model and the second AI model may be implemented as a single AI model.

The processor 220 according to an embodiment may obtain the second content corresponding to the prompt using the second AI model. The processor 220 according to an embodiment may input the prompt obtained in association with the first content to the second AI model and obtain the second content generated by a prompt processing result by the second AI model. The second content according to an embodiment may include text associated with the first content, an image associated with the first content, a video associated with the first content, a uniform resource locator (URL) associated with the first content, a setting value of the external electronic device associated with the first content, and/or a control value of the external electronic device associated with the first content. The processor 220 according to an embodiment may transmit the first content and the second content to the external electronic device 202 or transmit the second content to the external electronic device 202. The processor 220 according to an embodiment may transmit the first content and the second content to the external electronic device 202 through the communication circuitry 290 when the external electronic device 202 is capable of supporting the first content, and may transmit the second content to the external electronic device 202 through the communication circuitry 290 when the external electronic device 202 is incapable of supporting the first content.

The processor 220 according to an embodiment may respectively generate at least one prompt associated with each of the at least one recommended external electronic device when determining the at least one recommended external electronic device. The processor 220 according to an embodiment may input the content analysis information of the first content and the device characteristic information of each of the external electronic devices to the first AI model when using the first AI model for the determination of the at least one recommended external electronic device and the generation of the at least one prompt. The processor 220 according to an embodiment may further input the locations of the electronic device 201 and each of the external electronic devices (or information related to a distance, a place, or other location between the electronic device 201 and the external electronic device) and/or context information (time, an operation state of each of the electronic device 201 and the external electronic device, or other designated context information) to the first AI model for the determination of the at least one recommended external electronic device and the generation of the at least one prompt.

The processor 220 according to an embodiment may determine (or decide or identify) whether each of the external electronic devices is capable of supporting the first content and whether second content to be received by each of the external electronic devices may be generated through the first AI model, and may obtain (or generate or determine) at least one recommended external electronic device (e.g., a recommended external electronic device list) from among the external electronic devices based on the determination result, and may generate at least one prompt associated with each of the at least one recommended external electronic device. The processor 220 according to an embodiment may generate a first prompt for a first external electronic device and a second prompt for a second external electronic device when the first external electronic device and the second external electronic device are recommended. The processor 220 according to an embodiment may input the content analysis information of the first content, the device characteristic information of the first external electronic device, and location and context information of each of the electronic device 201 and the first external electronic device to the first AI model to generate the first prompt for the first external electronic device. The processor according to an embodiment may input the content analysis information of the first content, the device characteristic information of the second external electronic device, and location and context information of each of the electronic device 201 and the second external electronic device to the first AI model to generate the second prompt for the second external electronic device.

Table 1 below may indicate whether the first content is supportable and a prompt obtained from the first AI model based on input of the content analysis information and the device characteristic information of the external electronic device to the first AI model according to an embodiment.

**[Table 1]**

| Content analysis information | | Device characteristic information | | First AI model output (whether the first content is supportable and prompt) |
|---|---|---|---|---|
| Content type | Analysis information | Device type | Function supported by device | |
| Image | Spaghetti photo | refrigerator | Display function | - Spaghetti photo display supportable - Prompt for generating second content associated with the spaghetti photo and supported by the refrigerator (e.g., "Please generate content including additional information for cooking spaghetti, the form of the additional content should have a form of a video and text that may be displayed on a display and, when generating each content, a recipe and cooking order for spaghetti cooking should be included.") |
| Image | Chicken photo | Oven | LED display function, oven function | - Chicken photo display not supportable - Prompt for generating second content associated with the chicken photo and supported by the oven (e.g., "Generate setting values of the oven when cooking chicken in the oven") |
| Image | Group photo of people | smartphone | Display function, image editing function, image transmissio n function | - Group photo of people display supportable - Prompt for generating second content associated with the group photo of people and supported by the smartphone (e.g., "Crop only the person related to family from the group photo of people and generate a new photo", "Extract only the area where I am visible from the group photo of people, generate a photo, and transmit the generated photo to my mother", "Add a description of a friend to the area where the friend is visible in the group photo of people", or "Add a description to the area including excessive action or funny scene in the group photo of people") |
| Image | Clothes photo | Washing machine | Washing function | - Clothes photo display not supportable - Prompt for generating second content associated with the clothes photo and supported by the washing machine (e.g., "Analyze the clothes photo to identify information about the clothes, and generate washing machine setting values according to the fabric of the clothes") |
| Image | Food photo | VR device | VR content playback function | - Food photo display supportable - Prompt for generating second content associated with the food photo and supported by the VR device (e.g., "Please analyze the food photo to identify information about the food, and generate virtual reality content cooking the food in the photo") |
| Audio | Music | TV | Home theater function | - Music output supportable - Prompt for generating second content associated with the music and supported by the TV (e.g., "Turn on the home theater function of the TV and output music through the home theater") |

Referring to Table 1 above, the processor 220 according to an embodiment may, when the first content is a spaghetti photo and the external electronic device is a refrigerator, convert the analysis information of the spaghetti image into low-dimensional first vectors, convert the refrigerator device characteristic information including text indicating a device type, a device ID, a specification of the device, a function supported by the device, or device characteristics of another refrigerator corresponding to the refrigerator into low-dimensional second vectors, and post-process data (e.g., {0.1, 0.2, -0.4, 0.3, -0.6, ...}) obtained by combining the first vectors and the second vectors to generate a prompt including natural language (e.g., "Please generate content including additional information for cooking spaghetti, the form of the additional content should have a form of a video and text that may be displayed on a display and, when generating each content, a recipe and cooking order for spaghetti cooking should be included.") or a function (or a command) (e.g., {"category: cooking", "additional content: spaghetti cooking method video, spaghetti cooking recipe", "device characteristics: refrigerator, display, device specification, ..."}) that may be input to the second AI model. The processor 220 according to an embodiment may generate a prompt in a manner similar to that for the spaghetti photo when the first content is a chicken photo, a group photo of people, a clothes photo, or music and the first external device is an oven, a smartphone (or a mobile electronic device), a washing machine, or a TV. The processor 220 according to an embodiment may generate second content for each of the at least one recommended external electronic device using the at least one prompt for each of the at least one recommended external electronic device. The second content according to an embodiment may include text associated with the first content, an image associated with the first content, a video associated with the first content, a uniform resource locator (URL) associated with the first content, a setting value of the external electronic device associated with the first content, and/or a control value of the external electronic device associated with the first content. The processor 220 according to an embodiment may display the at least one recommended external electronic device on the display 260, and determine (or select) the external electronic device 202 to which to transmit the first content according to a user input.

The processor 220 according to an embodiment may identify the second content of the determined external electronic device 202 from among the additional content for each of the at least one recommended external electronic device based on the determination of the external electronic device 202 to which to transmit the first content.

The processor 220 according to an embodiment may transmit the first content and the second content to the external electronic device 202 through the communication circuitry 290 or transmit the second content to the external electronic device 202 through the communication circuitry 290. The processor 220 according to an embodiment may transmit the first content and the second content to the external electronic device 202 through the communication circuitry 290 when the external electronic device 202 is capable of supporting the first content, and may transmit the second content to the external electronic device 202 through the communication circuitry 290 when the external electronic device 202 is incapable of supporting the first content. The electronic device 201 according to an embodiment may display a screen associated with the external electronic device setting value change on the display 260 when transmitting the second content when the second content includes a setting value of the external electronic device associated with the first content. The electronic device 201 according to an embodiment may display a screen associated with control of the external electronic device 202 on the display 260 when transmitting the second content when the second content includes a control value of the external electronic device associated with the first content.

The external electronic device 202 according to an embodiment may receive the first content and the second content from the electronic device 201. The external electronic device 202 according to an embodiment may output (or play or execute or display) the first content and output or play or execute or display or apply the second content together when the first content and the second content are received from the electronic device 201. The external electronic device 202 according to an embodiment may output or play or execute or display or apply the second content when only the second content is received from the electronic device 201.

The external electronic device 202 according to an embodiment may display text or an image or a video when the second content including text or an image or a video associated with the first content is received. The external electronic device 202 according to an embodiment may execute a URL when receiving the second content including a uniform resource locator (URL) associated with the first content. The external electronic device 202 according to an embodiment may change a setting value of the external electronic device 202 to the received setting value when receiving the second content including a setting value of the external electronic device associated with the first content. The external electronic device 202 according to an embodiment may be controlled based on the received control value when receiving the second content including a control value of the external electronic device associated with the first content.

The memory 230 (e.g., the memory 130 of FIG. 1) according to an embodiment may store various data used by at least one component (e.g., the processor 220, the communication circuitry 290, and/or the display 260) of the electronic device 201. The data may include, e.g., software (e.g., a software module or the program 140) and input data or output data for a command related thereto. The memory 230 according to an embodiment may store AI models (e.g., the first AI model and the second AI model), and may store a program (e.g., a software module or the program 140 of FIG. 1) used for the content transmission operation using the AI model, as well as various data generated during execution of the program. The memory 230 according to an embodiment may store instructions causing the processor 220 to perform the content transmission operation (or method) using the AI model of the disclosure.

The display 260 (e.g., the display 160 of FIG. 1) according to an embodiment may display various types of information under the control of the processor 220. The display 260 according to an embodiment may display a screen associated with performance of the content transmission operation (or method) using the AI model. According to an embodiment, the display 260 may be implemented in the form of a touch screen. When the display 260 is implemented together with the input module in the form of a touch screen, the display 260 may display various pieces of information generated according to the user's touch.

The communication circuitry 290 (e.g., the communication module 190 of FIG. 1) according to an embodiment may include a wired communication module (e.g., a USB communication module) and/or a wireless communication module (e.g., a cellular module, a wireless-fidelity (Wi-Fi) module, a Bluetooth module, or a near field communication (NFC) module). The communication module 290 according to an embodiment may communicate with the external electronic device 202 (e.g., the electronic device 102 of FIG. 1 or the electronic device 104 of FIG. 1). The communication circuitry 290 according to an embodiment may transmit the first content and the second content to the external electronic device 202 or transmit the second content to the external electronic device 202 based on control of the processor 220.

According to an embodiment, the electronic device 201 is not limited to the configuration illustrated in FIG. 2 and may be configured to further include various components. According to an embodiment, the electronic device 201 may further include an input module (e.g., the input module 150 of FIG. 1) and/or a sound output module (e.g., the sound output module 155 of FIG. 1), and may receive various inputs associated with performance of the content transmission operation (or method) using the AI model through the input module, and may output sound associated with performance of the content transmission operation (or method) using the AI model through the sound output module.

In an embodiment, major components of the electronic device have been described through the electronic device 201 of FIG. 2. However, in various embodiments, not all of the components illustrated in FIG. 2 are essential components, and the connection relationship between the main components of the electronic device 201 described above with reference to FIG. 2 may be changed according to various embodiments.

An electronic device (e.g., the electronic device 101 of FIG. 1 or the electronic device 201 of FIG. 2) according to an embodiment may include communication circuitry (e.g., the communication module 190 of FIG. 1 or the communication circuitry 290 of FIG. 2), memory (e.g., the memory 130 of FIG. 1 or the memory 230 of FIG. 2), and a processor (the processor 120 of FIG. 1 or the processor 220 of FIG. 2) operatively connected to the communication circuitry and the memory. The memory according to an embodiment may store instructions configured to, when executed by the processor, cause the electronic device to identify an external electronic device (e.g., the external electronic device 102 of FIG. 1 or the external electronic device 202 of FIG. 2) to which to transmit first content. The instructions according to an embodiment may be configured to, when executed by the processor, cause the electronic device to obtain a prompt for generating second content associated with the first content and supported by the external electronic device based on the content analysis information of the first content and the device characteristic information of the external electronic device. The instructions according to an embodiment may be configured to, when executed by the processor, cause the electronic device to obtain the second content corresponding to the prompt using an artificial intelligence (AI) model. The instructions according to an embodiment may be configured to, when executed by the processor, cause the electronic device to transmit the first content and the second content to the external electronic device through the communication circuitry or transmit the second content to the external electronic device through the communication circuitry.

The instructions according to an embodiment may be further configured to, when executed by the processor, cause the electronic device to determine one of external electronic devices communicatively connected to the electronic device through the communication circuitry as the external electronic device to which to transmit the first content.

An electronic device according to an embodiment may further include a display, and the instructions may be configured to, when executed by the processor, cause the electronic device to display at least one external electronic device recommended from among the external electronic devices on the display based on the first content analysis information and the device characteristic information of each of the external electronic devices. The instructions according to an embodiment may be further configured to cause the electronic device to determine the external electronic device to which to transmit the first content from among the at least one external electronic device based on a user input.

The instructions according to an embodiment may be further configured to, when executed by the processor, cause the electronic device to identify whether the external electronic device is capable of supporting the first content. The instructions according to an embodiment may be configured to, when executed by the processor, cause the electronic device to, when the external electronic device is capable of supporting the first content, transmit the first content and the second content to the external electronic device through the communication circuitry. The instructions according to an embodiment may be further configured to cause the electronic device to, when the external electronic device is incapable of supporting the first content, transmit the second content to the external electronic device through the communication circuitry.

The instructions according to an embodiment may be further configured to, when executed by the processor, cause the electronic device to obtain the content analysis information including first vectors for an image corresponding to the first content. The instructions according to an embodiment may be further configured to, when executed by the processor, cause the electronic device to obtain the device characteristic information including second vectors for text corresponding to device characteristics of the external electronic device. The instructions according to an embodiment may be further configured to, when executed by the processor, cause the electronic device to obtain the prompt by combining the first vectors and the second vectors.

The prompt according to an embodiment may include natural language, a function, or a command.

The first content according to an embodiment may include an image, a video, and/or audio.

The second content according to an embodiment may include text associated with the first content, an image associated with the first content, a video associated with the first content, a uniform resource locator (URL) associated with the first content, a setting value of the external electronic device associated with the first content, and/or a control value of the external electronic device associated with the first content.

The external electronic device according to an embodiment may be a mobile device (e.g., a smartphone), a refrigerator, an oven, an induction cooktop, an air conditioner, a washing machine, a television (TV), a virtual reality (VR) device, or an internet of things (IOT) device.

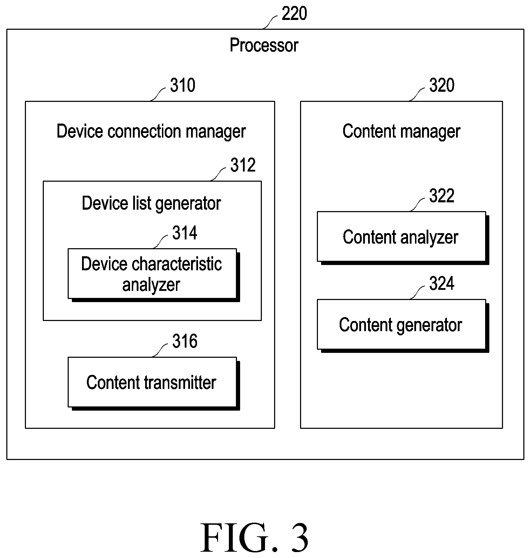

FIG. 3 is a view illustrating a configuration of a processor according to an embodiment. Referring to FIG. 3, the processor 220 according to an embodiment may include components (e.g., ~unit) processing at least one function or operation. In FIG. 3, a term such as '~unit' refers to a unit processing at least one function or operation, and may be implemented by hardware, software, or a combination of hardware and software. According to another embodiment, '~unit' may be replaced with a term such as '~circuit', '~module', or '~device'.

The processor 220 according to an embodiment may include a device connection manager 310 and a content manager 320.

The device connection manager 310 according to an embodiment may manage external electronic devices connected to the electronic device 201. The device connection manager 310 according to an embodiment may include a device list generator 312, a device characteristic analyzer 314, and a content transmitter 316. The device list generator 312 according to an embodiment may generate a list of external electronic devices connected to the electronic device 201. The device characteristic analyzer 312 according to an embodiment may analyze device characteristics including a device type, a device ID, a specification of a device, a function supported by a device, or other device characteristics for each of the external electronic devices connected to the electronic device 201 to obtain device characteristic information. The content transmitter 316 according to an embodiment may determine (or decide or identify) whether each of the external electronic devices is capable of receiving the first content and whether second content to be received by each of the external electronic devices may be generated using the first AI model, and may obtain (or generate or determine) at least one recommended external electronic device (e.g., a recommended external electronic device list) from among the external electronic devices based on the determination result, and may generate at least one prompt associated with each of the at least one recommended external electronic device.

The content manager 320 according to an embodiment may analyze the first content that is a subject of a transmission request, or may generate second content associated with the first content and supported by the external electronic device 202. The content manager 320 according to an embodiment may include a content analyzer 322 and a content generator 324. The content analyzer 322 according to an embodiment may analyze the first content that is a subject of a transmission request. The content generator 324 according to an embodiment may generate second content associated with the first content and supported by the external electronic device 202 using the second AI model.

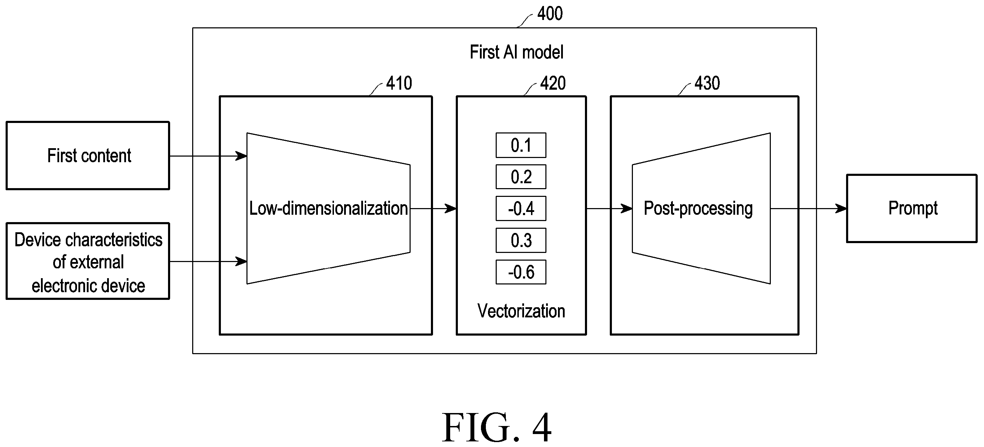

FIG. 4 is a view schematically illustrating a prompt generation operation using a first AI model according to an embodiment.

Referring to FIG. 4, the processor (e.g., the processor 120 of FIG. 1 or the processor 220 of FIG. 2) of an electronic device (e.g., the electronic device 101 of FIG. 1 or the electronic device 202 of FIG. 2) according to an embodiment may input first content analysis information and device characteristics of an external electronic device to a first AI model 400 to perform low-dimensionalization 410, vectorization 420, and post-processing 430, and obtain a prompt generated as a result.

The processor 220 according to an embodiment may, when the first content analysis information and the device characteristics of the external electronic device are input to the first AI model 400, convert the first content analysis information into low-dimensional first vectors and convert the device characteristics of the external electronic device into low-dimensional second vectors through the low-dimensionalization 410. The processor 220 according to an embodiment may perform the vectorization 420 to obtain vectors (e.g., {0.1, 0.2, -0.4, 0.3, -0.6, ...}) obtained by combining the first vectors and the second vectors. The processor 220 according to an embodiment may perform the post-processing 430 to generate a prompt including natural language or a function (or a command) that may be input to the second AI model from the vectors. The processor 220 according to an embodiment may, when the first content is a spaghetti image and the external electronic device is a refrigerator, convert the analysis information of the spaghetti image into low-dimensional first vector data through the low-dimensionalization 410, convert the refrigerator device characteristic information including text indicating a device type, a device ID, a specification of the device, a function supported by the device, or device characteristics of another refrigerator corresponding to the refrigerator into low-dimensional second vector data, perform the vectorization 420 to obtain data (e.g., {0.1, 0.2, -0.4, 0.3, -0.6, ...}) obtained by combining the first vector data and the second vector data, and generate a prompt including natural language (e.g., "Please generate content including additional information for cooking spaghetti, the form of the additional content should have a form of a video and text that may be displayed on a display and, when generating each content, a recipe and cooking order for spaghetti cooking should be included.") or a function (or a command) (e.g., {"category: cooking", "additional content: spaghetti cooking method video, spaghetti cooking recipe", "device characteristics: refrigerator, display, device specification, ..."}) that may be input to the second AI model through the post-processing 430.

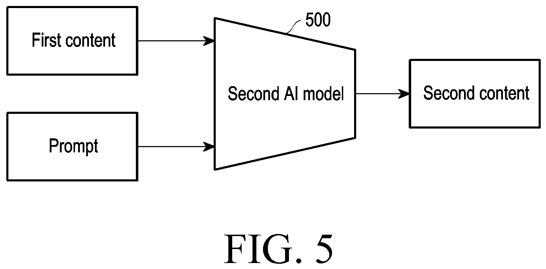

FIG. 5 is a view schematically illustrating a second content generation operation using a second AI model according to an embodiment.

Referring to FIG. 5, the processor (e.g., the processor 120 of FIG. 1 or the processor 220 of FIG. 2) of an electronic device (e.g., the electronic device 101 of FIG. 1 or the electronic device 202 of FIG. 2) according to an embodiment may input the first content (or first content analysis information) and a prompt obtained using the first AI model 400 to a second AI model 500 to obtain second content generated as a result. The processor 220 according to an embodiment may further input device characteristic information of the external electronic device in addition to the first content (or first content analysis information) and the prompt to obtain second content generated as a result.

The processor 220 according to an embodiment may, when the first content is a spaghetti photo and the prompt obtained using the first AI model 400 includes natural language (e.g., "Please generate content including additional information for cooking spaghetti, the form of the additional content should have a form of a video and text that may be displayed on a display and, when generating each content, a recipe and cooking order for spaghetti cooking should be included.") or a function (or a command) (e.g., {"category: cooking", "additional content: spaghetti cooking method video, spaghetti cooking recipe", "device characteristics: refrigerator, display, device specification, ..."}), generate a spaghetti cooking recipe video or text that may be displayed on a display of the refrigerator as second content using the second AI model 500.

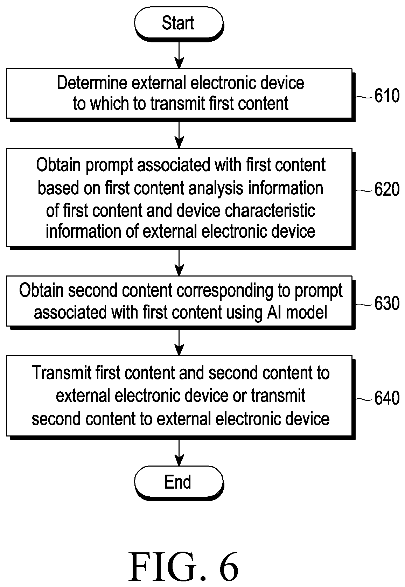

FIG. 6 is a flowchart illustrating a method of transmitting content using an AI model in an electronic device according to an embodiment.

Referring to FIG. 6, the processor (e.g., the processor 120 of FIG. 1 or the processor 220 of FIG. 2, hereinafter described using the processor 220 of FIG. 2 as an example) of an electronic device (e.g., the electronic device 101 of FIG. 1 or the electronic device 201 of FIG. 2) according to an embodiment may perform at least one of operations 610 to 640.

In operation 610, the processor 220 according to an embodiment may identify the external electronic device 202 to which to transmit the first content. The processor 220 according to an embodiment may determine (or identify or confirm) at least one recommended external electronic device recommended to receive the first content from among the external electronic devices using the content analysis information of the first content, the device characteristic information of each of the external electronic devices connected to the electronic device 201, locations of the electronic device 201 and each of the external electronic devices (or information related to a distance, a place, or other location between the electronic device 201 and the external electronic device), and/or context information (time, an operation state of each of the electronic device 201 and the external electronic device, or other designated context information), and may identify (or determine or identify) the external electronic device 202 to which to transmit the first content from among the at least one recommended external electronic device based on a user input.

In operation 620, the processor 220 according to an embodiment may obtain (or generate) a prompt associated with the first content based on the content analysis information of the first content and the device characteristic information of the external electronic device 202. The processor 220 according to an embodiment may use the first AI model or a designated rule (or condition) for determining the external electronic device 202 to which to transmit the first content and generating the prompt. The processor 220 according to an embodiment may, when using the first AI model, when the first content is a spaghetti photo and the external electronic device is a refrigerator, convert the analysis information of the spaghetti image into low-dimensional first vector data, convert the refrigerator device characteristic information including text indicating a device type, a device ID, a specification of the device, a function supported by the device, or device characteristics of another refrigerator corresponding to the refrigerator into low-dimensional second vector data, and post-process data (e.g., {0.1, 0.2, -0.4, 0.3, -0.6, ...}) obtained by combining the first vector data and the second vector data to generate a prompt including natural language (e.g., "Please generate content including additional information for cooking spaghetti, the form of the additional content should have a form of a video and text that may be displayed on a display and, when generating each content, a recipe and cooking order for spaghetti cooking should be included.") or a function (or a command) (e.g., {"category: cooking", "additional content: spaghetti cooking method video, spaghetti cooking recipe", "device characteristics: refrigerator, display, device specification, ..."}) that may be input to the second AI model.

In operation 630, the processor 220 according to an embodiment may obtain the second content corresponding to the prompt using the second AI model. The processor 220 according to an embodiment may input the prompt obtained in association with the first content to the second AI model and obtain the second content generated based on the prompt processing result by the second AI model. The second content according to an embodiment may include text associated with the first content, an image associated with the first content, a video associated with the first content, a uniform resource locator (URL) associated with the first content, a setting value of the external electronic device associated with the first content, and/or a control value of the external electronic device associated with the first content.

In operation 640, the processor 220 according to an embodiment may transmit the first content and the second content to the external electronic device 202 or transmit the second content to the external electronic device 202. The processor 220 according to an embodiment may transmit the first content and the second content to the external electronic device 202 through the communication circuitry 290 when the external electronic device 202 is capable of supporting the first content, and may transmit the second content to the external electronic device 202 through the communication circuitry 290 when the external electronic device 202 is incapable of supporting the first content. The external electronic device 202 according to an embodiment may receive the first content and the second content or receive the second content from the electronic device 201. The external electronic device 202 according to an embodiment may output (or play or execute or display) the first content and output or play or execute or display or apply the second content together when the first content and the second content are received from the electronic device 201. The external electronic device 202 according to an embodiment may output or play or execute or display or apply the second content when the second content is received from the electronic device 201.

A method of transmitting content using an artificial intelligence model in an electronic device (e.g., the electronic device 101 of FIG. 1 or the electronic device 201 of FIG. 2) according to an embodiment may include an operation of identifying the external electronic device 102, 202 to which to transmit first content. The method according to an embodiment may include an operation of obtaining a prompt for generating second content associated with the first content and supported by the external electronic device based on content analysis information of the first content and device characteristic information of the external electronic device. The method according to an embodiment may include an operation of obtaining the second content corresponding to the prompt using the artificial intelligence model. The method according to an embodiment may include an operation of transmitting the first content and the second content to the external electronic device through communication circuitry 190, 290 of the electronic device or transmitting the second content to the external electronic device through the communication circuitry.

The method according to an embodiment may further include an operation of determining one of external electronic devices communicatively connected to the electronic device through the communication circuitry as the external electronic device to which to transmit the first content.

The method according to an embodiment may further include an operation of displaying at least one external electronic device recommended from among the external electronic devices on a display of the electronic device based on the first content analysis information and the device characteristic information of each of the external electronic devices. The method according to an embodiment may further include an operation of determining the external electronic device to which to transmit the first content from among the at least one external electronic device based on a user input.

The method according to an embodiment may include an operation of identifying whether the external electronic device is capable of supporting the first content. The method according to an embodiment may further include an operation of, when the external electronic device is capable of supporting the first content, transmitting the first content and the second content to the external electronic device through the communication circuitry or, when the external electronic device is incapable of supporting the first content, transmitting the second content to the external electronic device through the communication circuitry.

The method according to an embodiment may include an operation of obtaining the content analysis information including first vectors for an image corresponding to the first content. The method according to an embodiment may include an operation of obtaining the device characteristic information including second vectors for text corresponding to device characteristics of the external electronic device. The method according to an embodiment may further include an operation of obtaining the prompt by combining the first vectors and the second vectors.

In the method according to an embodiment, the prompt may include natural language, a function, or a command. In the method according to an embodiment, the first content may include an image, a video, and/or audio. In the method according to an embodiment, the second content may include text associated with the first content, an image associated with the first content, a video associated with the first content, a uniform resource locator (URL) associated with the first content, a setting value of the external electronic device associated with the first content, and/or a control value of the external electronic device associated with the first content. In the method according to an embodiment, the external electronic device may be a smartphone, a refrigerator, an oven, an induction cooktop, an air conditioner, a washing machine, a television (TV), a virtual reality (VR) device, or an internet of things (IOT) device.

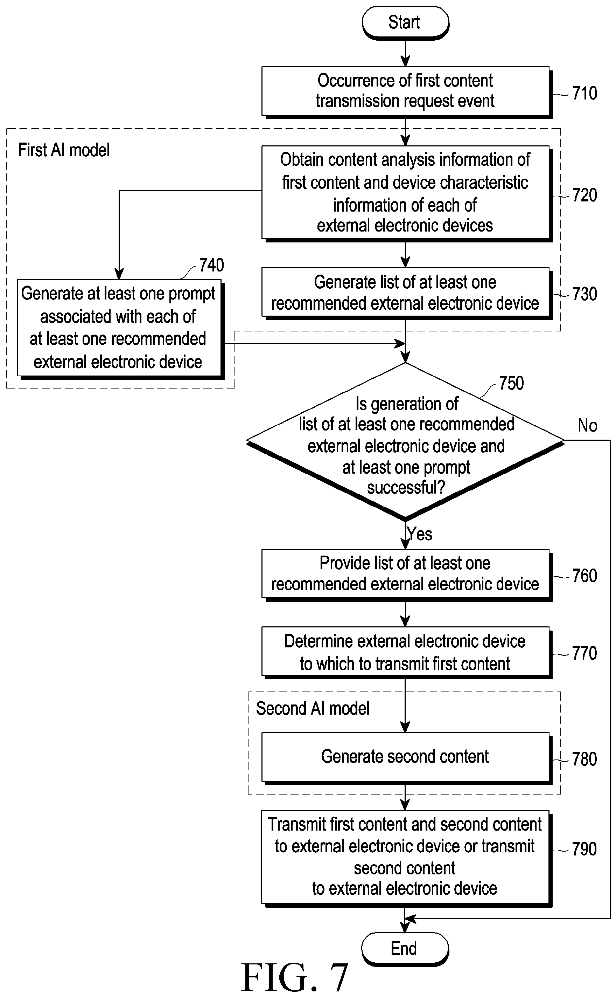

FIG. 7 is a flowchart illustrating an operation of determining an external electronic device to which to transmit first content from among at least one recommended external electronic device and generating and transmitting second content in an electronic device according to an embodiment.

Referring to FIG. 7, the processor (e.g., the processor 120 of FIG. 1 or the processor 220 of FIG. 2, hereinafter described using the processor 220 of FIG. 2 as an example) of an electronic device (e.g., the electronic device 101 of FIG. 1 or the electronic device 201 of FIG. 2) according to an embodiment may perform at least one of operations 710 to 790.

In operation 710, the processor 220 according to an embodiment may identify occurrence of a transmission request event for the first content. The first content according to an embodiment may include text, an image (or image data), a video (or video data), and/or audio (or audio data). For example, the processor 220 may identify a transmission request event for a photo (or image) selected by a user from among photos (or images) of a gallery (or photo album) application.

In operation 720, the processor 220 according to an embodiment may analyze the first content to obtain content analysis information based on occurrence of the first content transmission request event, and may obtain device characteristic information of each of the external electronic devices connected to the electronic device 201.

In operation 730, the processor 220 according to an embodiment may generate a list of at least one recommended external electronic device. The processor 220 according to an embodiment may determine at least one recommended external electronic device recommended to receive the first content from among the external electronic devices using the content analysis information of the first content, the device characteristic information of each of the external electronic devices connected to the electronic device 201, locations of the electronic device 201 and each of the external electronic devices (or information related to a distance, a place, or other location between the electronic device 201 and the external electronic device), and/or context information (time, an operation state of each of the electronic device 201 and the external electronic device, or other designated context information), and may generate a list of the determined at least one recommended external electronic device. The processor 220 according to an embodiment may determine (or decide or identify) whether each of the external electronic devices is capable of supporting the first content and whether second content to be transmitted to each of the external electronic devices may be generated, and may determine at least one recommended external electronic device from among the external electronic devices based on the determination result.

In operation 740, the processor 220 according to an embodiment may generate at least one prompt associated with each of the at least one recommended external electronic device. The processor 220 according to an embodiment may use the first AI model or a designated rule (or condition) for the determination of the at least one recommended external electronic device and the generation of the at least one prompt based on the content analysis information of the first content and the device characteristic information of each of the external electronic devices connected to the electronic device 201. The prompt according to an embodiment may include natural language or a function (or a command) that may be input to the second AI model for generating second content associated with the first content and supported by the external electronic device. Operations 720 to 730 according to an embodiment may be performed using the first AI model.

In operation 750, the processor 220 according to an embodiment may identify whether the generation of the list of at least one recommended external electronic device and the at least one prompt is successful. The processor 220 according to an embodiment may terminate when the generation of the list of at least one recommended external electronic device and the at least one prompt is not successful.

In operation 760, the processor 220 according to an embodiment may provide (e.g., display on the display 260) the list of at least one recommended external electronic device when the generation of the list of at least one recommended external electronic device is successful.

In operation 770, the processor 220 according to an embodiment may determine (or select) the external electronic device 202 to receive the first content according to a user input.

In operation 780, the processor 220 according to an embodiment may obtain (or generate) the second content corresponding to the prompt for the external electronic device 202 using the second AI model based on the determination of the external electronic device 202 to receive the first content. The processor 220 according to an embodiment may input the prompt for the external electronic device 202 from among the at least one prompt generated in operation 740 to the second AI model based on the determination of the external electronic device 202 to receive the first content, and obtain the second content generated based on the prompt processing result by the second AI model. The second content according to an embodiment may include text associated with the first content, an image associated with the first content, a video associated with the first content, a uniform resource locator (URL) associated with the first content, a setting value of the external electronic device associated with the first content, and/or a control value of the external electronic device associated with the first content.

In operation 790, the processor 220 according to an embodiment may transmit the first content and the second content to the external electronic device 202 through the communication circuitry 290 or transmit the second content to the external electronic device 202 through the communication circuitry 290. The processor 220 according to an embodiment may transmit the first content and the second content to the external electronic device 202 through the communication circuitry 290 when the external electronic device 202 is capable of supporting the first content, and may transmit the second content to the external electronic device 202 through the communication circuitry 290 when the external electronic device 202 is incapable of supporting the first content.

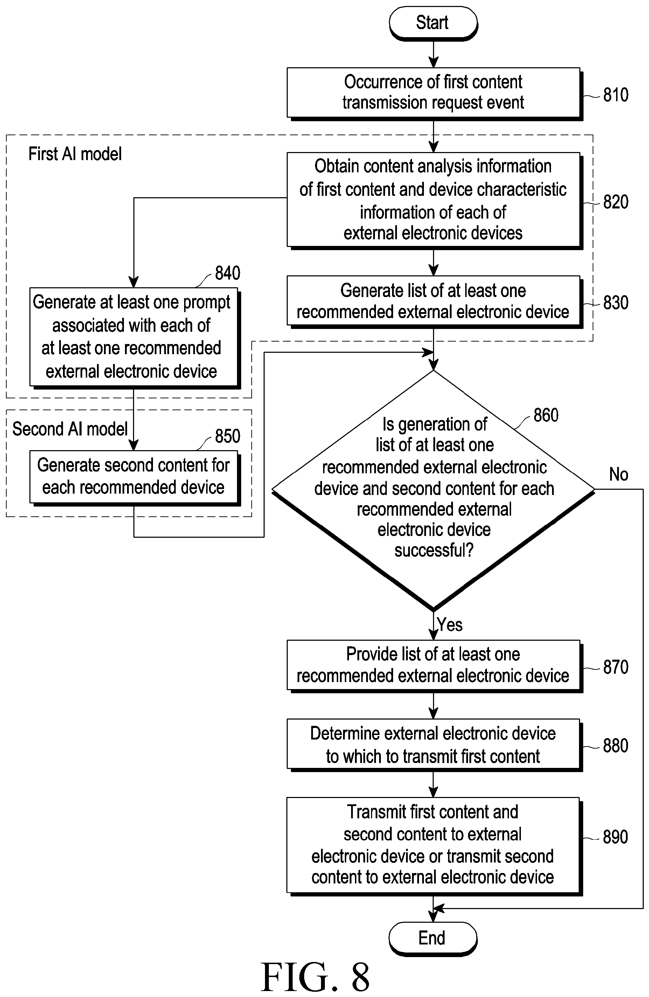

FIG. 8 is a flowchart illustrating an operation of generating second content for each of at least one recommended external electronic device and transmitting the second content to the external electronic device determined to receive the first content in an electronic device according to an embodiment.

Referring to FIG. 8, the processor (e.g., the processor 120 of FIG. 1 or the processor 220 of FIG. 2, hereinafter described using the processor 220 of FIG. 2 as an example) of an electronic device (e.g., the electronic device 101 of FIG. 1 or the electronic device 201 of FIG. 2) according to an embodiment may perform at least one of operations 810 to 890.

In operation 810, the processor 220 according to an embodiment may identify occurrence of a transmission request event for the first content. The first content according to an embodiment may include text, an image (or image data), a video (or video data), and/or audio (or audio data). For example, the processor 220 may identify a transmission request event for a photo (or image) selected by a user from among photos (or images) of a gallery (or photo album) application.

In operation 820, the processor 220 according to an embodiment may analyze the first content to obtain content analysis information based on occurrence of the first content transmission request event, and may obtain device characteristic information of each of the external electronic devices connected to the electronic device 201.

In operation 830, the processor 220 according to an embodiment may generate a list of at least one recommended external electronic device. The processor 220 according to an embodiment may determine at least one recommended external electronic device recommended to receive the first content from among the external electronic devices using the content analysis information of the first content, the device characteristic information of each of the external electronic devices connected to the electronic device 201, locations of the electronic device 201 and each of the external electronic devices (or information related to a distance, a place, or other location between the electronic device 201 and the external electronic device), and/or context information (time, an operation state of each of the electronic device 201 and the external electronic device, or other designated context information), and may generate a list of the determined at least one recommended external electronic device. The processor 220 according to an embodiment may determine (or decide or identify) whether each of the external electronic devices is capable of supporting the first content and whether second content to be transmitted to each of the external electronic devices may be generated, and may determine at least one recommended external electronic device from among the external electronic devices based on the determination result.

In operation 840, the processor 220 according to an embodiment may generate at least one prompt associated with each of the at least one recommended external electronic device. The processor 220 according to an embodiment may use the first AI model or a designated rule (or condition) for the determination of the at least one recommended external electronic device and the generation of the at least one prompt based on the content analysis information of the first content and the device characteristic information of each of the external electronic devices connected to the electronic device 201. The prompt according to an embodiment may include natural language or a function (or a command) that may be input to the second AI model for generating second content associated with the first content and supported by the external electronic device. Operations 820 to 840 according to an embodiment may be performed using the first AI model.

In operation 850, the processor 220 according to an embodiment may generate second content for each of the at least one recommended external electronic device using the at least one prompt for each of the at least one recommended external electronic device. Operation 850 according to an embodiment may be performed using the second AI model.

In operation 860, the processor 220 according to an embodiment may identify whether the generation of the list of at least one recommended external electronic device and the generation of second content for each of the at least one recommended external electronic device are successful. The processor 220 according to an embodiment may terminate when the generation of the list of at least one recommended external electronic device and the generation of second content for each of the at least one recommended external electronic device are not successful.

In operation 870, the processor 220 according to an embodiment may provide (e.g., display on the display 260) the list of at least one recommended external electronic device when the generation of the list of at least one recommended external electronic device and the generation of second content for each of the at least one recommended external electronic device are successful.

In operation 880, the processor 220 according to an embodiment may determine (or select) the external electronic device 202 to receive the first content. The processor 220 according to an embodiment may determine (or select) the external electronic device 202 to receive the first content according to a user input.

In operation 890, the processor 220 according to an embodiment may identify the second content of the external electronic device 202 from among the second content for each of the at least one recommended external electronic device generated in operation 850 based on the determination of the external electronic device 202 to receive the first content, and transmit the first content and the second content to the external electronic device 202 through the communication circuitry 290 or transmit the second content to the external electronic device 202 through the communication circuitry 290.

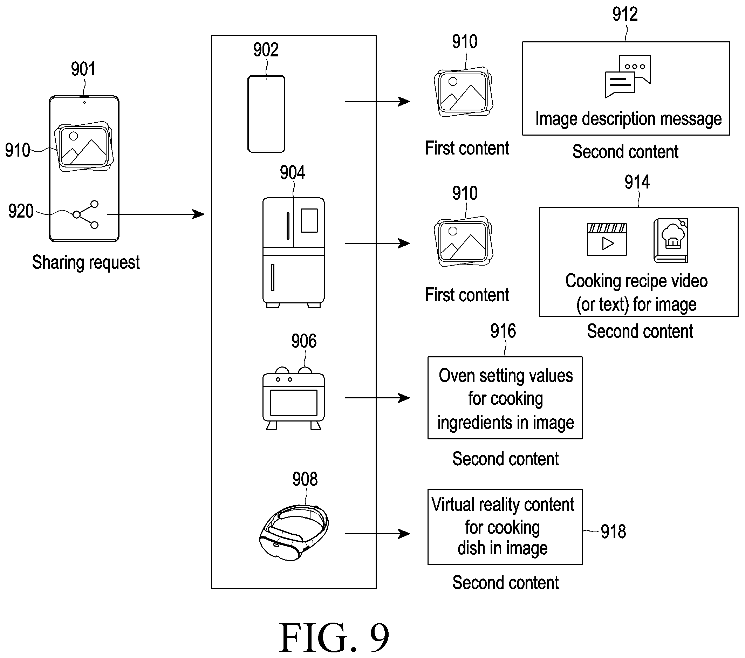

FIG. 9 is a view illustrating an example of additional content generated for each of at least one external electronic device when an image sharing request is made in an electronic device according to an embodiment.

Referring to FIG. 9, an electronic device (e.g., a smartphone) 901 (e.g., the electronic device 101 of FIG. 1 or the electronic device 201 of FIG. 2) (or a processor (e.g., the processor 120 of FIG. 1 or the processor 220 of FIG. 2) of the electronic device 901) according to an embodiment may identify occurrence of a transmission request event for an image 910 according to selection of a share icon 920 for a photo (image) 910 of a gallery (or photo album) application.

The electronic device 901 according to an embodiment may identify the analysis information of the image 910 and the external electronic devices connected to the electronic device 901 based on occurrence of the transmission request event for the image 910. The external electronic device connectable to the electronic device 901 according to an embodiment may include, e.g., a mobile device (e.g., a smartphone), a refrigerator, an oven, an induction cooktop, an air conditioner, a washing machine, a television (TV), a virtual reality (VR) device, or an internet of things (IOT) device, and other external electronic devices may be possible as long as they may be connected to the electronic device 901. One or more external electronic devices may be connected to the electronic device 901 according to an embodiment. FIG. 9 describes an example in which a plurality of external electronic devices are connected.

The electronic device 901 according to an embodiment may determine (or identify or confirm) at least one recommended external electronic device recommended to receive the first content from among the external electronic devices using the device characteristic information of each of the external electronic devices connected to the electronic device 901, locations of the electronic device 201 and each of the external electronic devices (or information related to a distance, a place, or other location between the electronic device 201 and each of the external electronic devices), and/or context information (time, an operation state of each of the electronic device 201 and each of the external electronic devices, or other designated context information). FIG. 9 describes an example in which a smartphone 902, a refrigerator 904, an oven 906, and a VR device 908 are determined as recommended external electronic devices. Another external electronic device or other external electronic devices may be determined as recommended external electronic devices.

The electronic device 901 according to an embodiment may generate at least one prompt associated with each of the at least one recommended external electronic device 902, 904, 906, 908 and generate additional content (e.g., second content) for each of the at least one recommended external electronic device using the at least one prompt for each of the at least one recommended external electronic device 902, 904, 906, 908.

According to an embodiment, the electronic device 901 may generate a prompt (e.g., "Describe the image") for generating second content associated with the image 901 and supported by the smartphone 902 for the smartphone 902, and generate second content (e.g., an image description message) 912 for the smartphone 902 using the prompt. According to an embodiment, the electronic device 901 may generate a prompt (e.g., "Please generate content including additional information for cooking the dish in the image, the form of the additional content should have a form of a video and text that may be displayed on a display and, when generating each content, a recipe and cooking order for the dish in the image should be included.") for generating second content associated with the image 901 and supported by the refrigerator 904 for the refrigerator 902, and generate second content (e.g., a cooking recipe video (or text) for the image) 914 for the refrigerator 904 using the prompt. According to an embodiment, the electronic device 901 may generate a prompt (e.g., "Generate setting values of the oven when cooking the ingredients in the image in the oven") for generating second content associated with the image 901 and supported by the oven 906 for the oven 906, and generate second content (e.g., oven setting values for cooking the ingredients in the image) 916 for the oven 906 using the prompt. According to an embodiment, the electronic device 901 may generate a prompt (e.g., "Please generate virtual reality content including additional information for cooking the dish in the image") for generating second content associated with the image 901 and supported by the VR device 908 for the VR device 908, and generate second content (e.g., virtual reality content for cooking the dish in the image) 918 for the VR device 908 using the prompt.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. The electronic device according to an embodiment of the disclosure is not limited to the above-described devices.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. In this document, each of phrases such as "A or B," "at least one of A and B," "at least one of A or B," "A, B, or C," "at least one of A, B, and C," and "at least one of A, B, or C" may include any one of the items listed together in the corresponding phrase, or all possible combinations thereof. Terms such as "first", "second", or "first" or "second" may be used simply to distinguish the corresponding component from another corresponding component, and do not limit the corresponding components in other aspects (e.g., importance or order). When a (e.g., first) component is referred to as being "coupled" or "connected" to another (e.g., second) component, with or without the terms "functionally" or "communicatively", it means that the component may be connected to the other component directly (e.g., wiredly), wirelessly, or through a third component.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in the form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include code generated by a compiler or code that may be executed by an interpreter. The storage medium readable by the machine may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

In a non-volatile storage medium storing instructions according to an embodiment, the instructions are configured to, when executed by an electronic device, cause the electronic device to perform at least one operation, and the at least one operation may include an operation of identifying an external electronic device to which to transmit first content, an operation of obtaining a prompt for generating second content associated with the first content and supported by the external electronic device based on content analysis information of the first content and device characteristic information of the external electronic device, an operation of obtaining the second content corresponding to the prompt using an artificial intelligence (AI) model, and an operation of transmitting the first content and the second content to the external electronic device through communication circuitry 190, 290 of the electronic device or transmitting the second content to the external electronic device through the communication circuitry.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101, 201) comprising:
communication circuitry (190, 290);
memory (130, 240) storing instructions;
at least one processor (120, 220) operatively connected to the communication circuitry and the memory,
wherein the instructions, when executed by the at least one processor individually or collectively, cause the electronic device to:
identify an external electronic device (102, 202) to which to transmit first content,
obtain a prompt for generating second content associated with the first content and supported by the external electronic device based on content analysis information of the first content and device characteristic information of the external electronic device,
obtain the second content corresponding to the prompt using an artificial intelligence (AI) model, and
transmit the first content and the second content to the external electronic device through the communication circuitry or transmit the second content to the external electronic device through the communication circuitry.

2. The electronic device of claim 1,
wherein the instructions, when executed by the at least one processor individually or collectively, cause the electronic device to:
determine one of external electronic devices communicatively connected to the electronic device through the communication circuitry as the external electronic device to which to transmit the first content.

3. The electronic device of claim 1 or 2, further comprising:
a display;
wherein the instructions, when executed by the at least one processor individually or collectively, cause the electronic device to:
display, on the display, at least one external electronic device recommended from among the external electronic devices based on the content analysis information of the first content and device characteristic information of each of the external electronic devices, and
determine the external electronic device to which to transmit the first content from among the at least one external electronic device based on a user input.

4. The electronic device of any one of claims 1 to 3,
wherein the instructions, when executed by the at least one processor individually or collectively, cause the electronic device to:
identify whether the external electronic device is capable of supporting the first content,
when the external electronic device is capable of supporting the first content, transmit the first content and the second content to the external electronic device through the communication circuitry, and
when the external electronic device is incapable of supporting the first content, transmit the second content to the external electronic device through the communication circuitry.

5. The electronic device of any one of claims 1 to 4,
wherein the instructions, when executed by the at least one processor individually or collectively, cause the electronic device to:
obtain the content analysis information including first vectors for an image corresponding to the first content,
obtain the device characteristic information including second vectors for text corresponding to device characteristics of the external electronic device, and
obtain the prompt by combining the first vectors and the second vectors.

6. The electronic device of any one of claims 1 to 5,
wherein the prompt includes natural language, a function, or a command, and
wherein the first content includes an image, a video, and/or audio.

7. The electronic device of any one of claims 1 to 6,
wherein the second content includes text associated with the first content, an image associated with the first content, a video associated with the first content, a uniform resource locator (URL) associated with the first content, a setting value of the external electronic device associated with the first content, and/or a control value of the external electronic device associated with the first content, and
wherein the external electronic device includes a smartphone, a refrigerator, an oven, an induction cooktop, an air conditioner, a washing machine, a television (TV), a virtual reality (VR) device, or an internet of things (IoT) device.

8. A method of transmitting content using an artificial intelligence (AI) model in an electronic device (101, 201), the method comprising:
identifying an external electronic device (102, 202) to which to transmit first content;
obtaining a prompt for generating second content associated with the first content and supported by the external electronic device based on content analysis information of the first content and device characteristic information of the external electronic device;
obtaining the second content corresponding to the prompt using the artificial intelligence model; and
transmitting the first content and the second content to the external electronic device through communication circuitry (190, 290) of the electronic device or transmitting the second content to the external electronic device through the communication circuitry.

9. The method of claim 8, further comprising:
determining one of external electronic devices communicatively connected to the electronic device through the communication circuitry as the external electronic device to which to transmit the first content.

10. The method of claim 8 or 9, further comprising:
displaying, on a display of the electronic device, at least one external electronic device recommended from among the external electronic devices based on the content analysis information of the first content and device characteristic information of each of the external electronic devices; and
determining the external electronic device to which to transmit the first content from among the at least one external electronic device based on a user input.

11. The method of any one of claims 8 to 10, further comprising:
identifying whether the external electronic device is capable of supporting the first content;
when the external electronic device is capable of supporting the first content, transmitting the first content and the second content to the external electronic device through the communication circuitry or, when the external electronic device is incapable of supporting the first content, transmitting the second content to the external electronic device through the communication circuitry.

12. The method of any one of claims 8 to 11, further comprising:
obtaining the content analysis information including first vectors for an image corresponding to the first content;
obtaining the device characteristic information including second vectors for text corresponding to the device characteristics of the external electronic device; and
obtaining the prompt by combining the first vectors and the second vectors.

13. The method of any one of claims 8 to 12, wherein
the prompt includes natural language, a function, or a command, and wherein
the first content includes an image, a video, and/or audio.

14. The method of any one of claims 8 to 13, wherein
the second content includes text associated with the first content, an image associated with the first content, a video associated with the first content, a uniform resource locator (URL) associated with the first content, a setting value of the external electronic device associated with the first content, and/or a control value of the external electronic device associated with the first content, and wherein
the external electronic device includes a smartphone, a refrigerator, an oven, an induction cooktop, an air conditioner, a washing machine, a television (TV), a virtual reality (VR) device, or an internet of things (IoT) device.

15. A non-transitory storage medium storing instructions, wherein the instructions, when executed by an electronic device, are configured to cause the electronic device to perform at least one operation, the at least one operation comprising:
identifying an external electronic device (102, 202) to which to transmit first content;
obtaining a prompt for generating second content associated with the first content and supported by the external electronic device based on content analysis information of the first content and device characteristic information of the external electronic device;
obtaining the second content corresponding to the prompt using an artificial intelligence (AI) model; and
transmitting the first content and the second content to the external electronic device through communication circuitry (190, 290) of the electronic device or transmitting the second content to the external electronic device through the communication circuitry.
